# EUROPEAN PATENT SPECIFICATION

(11) **EP 3 670 628 B1**
(45) Date of publication and mention of the grant of the patent: **16.06.2021**
(21) Application number: 19214317.0
(22) Date of filing: 07.12.2019
(51) Int. Cl.: C09K 3/14, B24D 3/14, B24D 3/34, B24D 18/00

(54) **ABRASIVE MIXTURE FOR GRINDING WHEELS AND METHOD OF ITS PRODUCTION**
SCHLEIFMITTELGEMISCH FÜR SCHLEIFSCHEIBEN UND ART UND WEISE SEINER HERSTELLUNG
MÉLANGE ABRASIF POUR ROUES DE BROYAGE ET SON PROCÉDÉ DE PRODUCTION

(30) Priority: 20.12.2018 CZ 20180726
(43) Date of publication of application: 24.06.2020
(73) Proprietor: J. E. Purkyne University in Usti nad Labem, 40096 Usti nad Labem (CZ)
(72) Inventor: HOLESOVSKY, Frantisek, 41113 Trebenice (CZ); CERNY, Jan, 40331 Usti nad Labe, (CZ)
(74) Representative: Kratochvil, Vaclav

(56) References cited:
- EP-A2- 0 273 569
- CZ-A3- 20 032 369
- US-B1- 6 454 822

## Description

### Technical field

The invention relates to the composition of a ceramic-based mixture for forming a thin abrasive layer on metal discs and to a way for its production.

### Background art

Ceramic mixtures for grind wheels are currently produced mainly for monolithic grinding wheels. Especially to ensure their grinding strength. The mixtures are based on the classical composition of abrasive grain, ceramic binder, additives. Document EP 0273569 - A2 discloses an abrasive mixture for grinding wheels according to the preamble of claim 1. The additives serve to create the porosity and processability of the mixture. The same mixtures are used for thin-film discs with a grain of polycrystalline diamond and cubic boron nitride. These mixtures require high production temperatures during binder firing and do not ensure more regular grain distribution. These mixtures are not used for thin layers of other abrasive materials.

### Summary of invention

The above shortcomings are largely removed by the abrasive mixture for the grinding wheels of the present invention. Its essence is that the mixture contains 12 to 20 wt. % aluminum oxynitride abrasive grain, 62 to 72 wt. % of ceramic binder, 12 to 18 wt. % globular corundum with a 5 to 100 µm marbles size and 2 to 5 wt. % potato starch.

A further aspect of the invention is the way for the production of the abrasive mixture as described above. In this process, a mixture of 12 to 20 wt. % abrasive grain aluminum oxynitride, 62-72 wt. % ceramic binder, 12 to 18 wt. % of globular corundum with a marbles size of 5 to 100 µm and 2 to 5 wt. % potato starch, is mixed and moistened and subsequently compressed at a pressure of at least 4 kN, then dried at 300 to 360 °C for 60 to 90 minutes, followed by firing at 700 to 790 °C for 45 to 80 minutes.

The essence of the solution is to create a mixture with modern abrasive grain - Abral - aluminum oxynitride, microcrystalline corundum, Cubitron, which is bonded by a low-temperature ceramic binder. In addition to these components, a mixture of globular corundum with a marbles size of 5 to 100 µm. This corundum ensures a more regular grain distribution while contributing to abrasive material removal and reducing surface roughness. The uniform size of corundum balls will increase the regular spacing between grains and thus the quality of the surface. The binding strength is provided by a ceramic binder which is fired to achieve low temperature strength of about 700 °C. Other components ensure above all the porosity of the wheel and its easy manufacture. The mixture can also be applied in a binder of artificial resin.

This solution has the following advantages:
- Improvement of the quality of the grinded surface.
- Improvement of the roughness of surface.
- Increase of the regularity in grain distance.
- Reduction of firing energy consumption.
- Material and energy savings are achieved when using a low layer abrasive mixture on metal disc of the grinding wheel.
- The abrasive mixture can form a low layer of abrasive with a binder on the metal disc of the grinding wheel.
- According to the desired density of the abrasive mixture the abrasive mixture may be molded in a wide range of compression pressures.

### Example of the invention realization

The mixture formed by 15 wt. % abrasive grain Abral, about 67 wt. % ceramic binder 44FK, 15 wt. % of globular corundum and 3 wt. % potato starch is mixed to maximum homogeneity, moistened and subsequently pressed in the pressing tool at a pressure of 5 kN or higher. Subsequently, drying is carried out at a temperature of 300 to 360 °C for 60 to 90 minutes depending on the size of the molding, and at a temperature of 700 to 730 °C, firing for 45 to 80 minutes to obtain the final strength of the pressed layer for the metal disc. Using a mixture, a surface roughness value Ra of 0.13 to 0.22 µm was achieved at a grinding wheel speed of 25 m.s-1, which is a very low speed. As the speed increases, the surface roughness significantly improves.

### Industrial applicability

The solution is applicable to abrasive wheels in ceramic binder with a layer thickness of 5 mm or more as well as monolithic grinding wheels. Metal discs with 5 to 30 mm abrasive coatings save energy, material and waste during production and use, and have a positive environmental impact against monolithic tools. Thanks to the higher grain regularity, the mixture ensures better roughness of the surface. As a result, the previous surface treatment operation can be shortened or omitted, saving time and production costs.

## Claims

1. Abrasive mixture for grinding wheels, ***characterized in that*** it contains 12 to 20 wt. % abrasive grain aluminum oxynitride, 62-72 wt. % ceramic binder, 12 to 18 wt. % of globular corundum with a marbles size of 5 to 100 µm and 2 to 5 wt. % potato starch.

2. The way of the production of the abrasive mixture according to claim no. 1, ***characterized in that*** the mixture comprises 12 to 20 wt. % aluminum oxynitride abrasive grain, 62 to 72 wt. % ceramic binder, 12 to 18 wt. globular corundum having a marbles size of 5 to 100 µm; up to 5 wt. % potato starch is mixed and moistened and subsequently pressed at a pressure of at least 4 kN, then dried at 300 to 360 °C for 60 to 90 minutes and then fired at 700 to 790 °C for 45 to 80 minutes.

## Patentansprüche

1. Schleifzusammensetzung für Schleifscheiben, **dadurch gekennzeichnet, dass** sie 12 bis 20 Gew.-% Aluminiumoxynitrid-Schleifkorn, 62 bis 72 Gew.-% Keramikbindemittel, 12 bis 18 Gew.-% globulären Korund mit einer Kugelgröße von 5 bis 100 µm und 2 bis 5 Gew.-%. Kartoffelstärke enthält.

2. Verfahren zur Herstellung der Schleifzusammensetzung nach Anspruch Nr.1, **dadurch gekennzeichnet, dass** die Mischung aus 12 bis 20 Gew.-% Aluminiumoxynitrid-Schleifkorn, 62 bis 72 Gew.-% Keramikbindemittel, 12 bis 18 Gew.-% globulärem Korund mit einer Kugelgröße von 5 bis 100 µm und 2 bis 5 Gew.-% Kartoffelstärke gemischt und angefeuchtet wird. Die Mischung wird dann bei einem Druck von mindestens 4 kN komprimiert, 60 bis 90 Minuten bei 300 bis 360 °C getrocknet und anschließend 45 bis 80 Minuten bei einer Temperatur von 700 bis 790 °C gebrannt.

## Revendications

1. Mélange abrasif pour meules, ***se caractérisant par le fait qu***'il comporte 12 à 20 % massiques de grain abrasif oxynitrure d'aluminium, 62 à 72 % massiques d'agglomérant céramique, 12 à 18 % massiques de corindon globulaire d'une taille de billes de 5 à 100 µm et 2 à 5 % massiques d'amidon de pomme de terre.

2. Mode de production du mélange abrasif selon la revendication 1, ***se caractérisant par le fait que*** le mélange de 12 à 20 % massiques de grain abrasif oxynitrure d'aluminium, 62 à 72 % massiques d'agglomérant céramique, 12 à 18 % massiques de corindon globulaire d'une taille de billes de 5 à 100 µm et 2 à 5 % massiques d'amidon de pomme de terre est mélangé et humidifié, puis est pressé à une pression d'au moins 4 kN, étant par la suite séché à une température de 300 à 360 °C pendant une durée de 60 à 90 minutes, la cuisson étant ensuite réalisée à une température de 700 à 790 °C pendant 45 à 80 minutes.
